Europäisches Patentamt

**European Patent Office**

Office européen des brevets

(19)

(11) Numéro de publication: **0 013 650**
**B1**

(12)

# FASCICULE DE BREVET EUROPEEN

(45) Date de publication du fascicule du brevet: **17.11.82**

(51) Int. Cl.³: **C 03 C 3/24,** C 03 C 3/10, C 03 C 3/30

(21) Numéro de dépôt: **80400031.3**

(22) Date de dépôt: **11.01.80**

(54) **Verre de scellement présentant un coefficient d'absorption élevé pour les rayons infra-rouges.**

(30) Priorité: **12.01.79 FR 7900747**

(43) Date de publication de la demande:
**23.07.80 Bulletin 80/15**

(45) Mention de la délivrance du brevet:
**17.11.82 Bulletin 82/46**

(84) Etats contractants désignés:
**BE DE FR GB NL SE**

(56) Documents cités:
**FR - A - 2 018 114**
**FR - A - 2 018 851**

(73) Titulaire: **CORNING GLASS WORKS**
**Houghton Park**
**Corning New York 14830 (US)**

(72) Inventeur: **Boudot, Jean Emile**
**2, Rue du Haut-Changis**
**F-77210 Avon (FR)**
Inventeur: **Jeanmaire, Michel**
**116bis, Avenue du Maréchal Leclerc**
**F-77460 Souppes-sur-Loing (FR)**
Inventeur: **Roger, Françoise**
**Résidence des Hauts d'Avon 49bis Rue du Souvenir**
**F-77210 Avon (FR)**

(74) Mandataire: **De Boisse, Louis**
**37, Avenue Franklin D. Roosevelt**
**F-75008 Paris (FR)**

Courier Press, Leamington Spa, England.

Verre de scellement présentant un coefficient d'absorption élevé pour les rayons infra-rouges

L'invention concerne un verre de scellement présentant un coefficient d'absorption élevé pour les rayons infrarouges, qui est utile notamment pour constituer l'enveloppe d'un interrupteur à lames métalliques souples, cette enveloppe pouvant être scellée ou soudée, de façon étanche, par application de rayons infra-rouges.

La fabrication d'interrupteurs à lames métalliques souples (appelés aussi interrupteurs Reed) s'effectue dans une enceinte fermée où règne une atmosphère gazeuse appropriée (réductrice ou neutre) ou le vide. Des tubes de verre sont utilisés pour constituer l'enveloppe des interrupteurs et le scellement de chaque tube aux lames de chaque interrupteur est effectué automatiquement par un appareillage mécanique, un rayonnement infra-rouge étant appliqué aux extrémités de chaque tube de façon à chauffer le verre et à le porter à une température suffisante pour pouvoir souder lesdites extrémités aux lames de façon étanche. L'application du rayonnement infra-rouge s'opère généralement en utilisant une lampe à halogène classique comme source de rayonnement infra-rouge, des miroirs réfléchissant ledit rayonnement sur le tube à sceller.

Pour convenir dans une telle application, le verre doit présenter un certain nombre de propriétés particulières:

— son coefficient de dilatation thermique doit être adapté à celui du métal constituant les lames métalliques;
— il doit présenter une résistance thermique et mécanique suffisante;
— il doit présenter un coefficient d'absorption élevé (c'est-à-dire supérieur à 98%) pour les rayons infra-rouges dans la bande de longueurs d'onde de 0,7 à 4 microns environ;
— il doit présenter un faible taux de volatilisation à la température de scellement afin de réduire au minimum l'encrassement de l'appareillage, en particulier des miroirs réfléchissants, et la pollution des lames métalliques à l'intérieur même de l'interrupteur;
— il doit présenter une température de scellement relativement basse pour réduire la quantité d'énergie à apporter pour réaliser le scellement ou soudure.

Un verre du commerce couramment employé pour une telle application est le verre vendu par la Demanderesse sous le n° de Code 9365 de son catalogue. La composition de ce verre, en % en poids, est la suivante: $SiO_2$: 70,38%; $Al_2O_3$: 2,90%; $Li_2O$: 0,68%; $Na_2O$: 8,85%; $K_2O$: 6,20%; $BaO$: 7,75%; $F$: 0,64%; $Fe_2O_3$: 2,90%. Ce verre présente toutefois un taux de volatilisation de l'ordre de 320 ppm (parties par million) et une température à $10^4$ poises ($10^3$ Pa.s) de l'ordre de 1000°C et il est apparu souhaitable, pour répondre aux désirs de la clientèle de mettre au point un verre présentant un taux de volatilisation et une température de scellement réduits.

Le brevet français 2 018 114 décrit, par ailleurs, des verres présentant un coefficient d'absorption élevé pour les rayons infrarouges, dont la composition, en poids, est la suivante: 60—70% de $SiO_2$; 0—2% de $B_2O_3$; 0,5—2% de $Li_2O$; 10—16% de $Na_2O$; 0—2% de $K_2O$; 6—16% de $BaO$; 1—4% de $Al_2O_3$; 0—5% de $CaO+MgO$ et 2—4% de $FeO$. Ces verres présentent une teneur en $BaO$ plus élevée que ceux de l'invention. En outre, les quatre exemples de verres donnés dans ce brevet contiennent tous du $K_2O$ et du $B_2O_3$ et présentent, selon toute vraisemblance, un taux de volatilisation relativement élevé. On ne trouve donc dans ce brevet antérieur aucun enseignement permettant de fabriquer un verre présentant l'ensemble de propriétés désirables indiquées ci-dessus.

L'invention a pour but de fournir un tel verre.

Plus précisément, l'invention concerne un verre de scellement présentant un coefficient d'absorption des rayons infrarouges (dans la gamme de 0,7 à 4 micrometres) d'au moins 98%, un coefficient de dilatation thermique moyen entre 20 et 300°C compris entre 88 et $92,5 \times 10^{-7}/°C$, et une faible volatilisation à la température de scellement, caractérisé en ce qu'il a la composition suivante, en % en poids:

| | |
|---|---|
| $SiO_2$: | 67 à 73% |
| $Al_2O_3$: | 3,5 à 6,0% |
| $Li_2O$: | 1,0 à 3,0% |
| $Na_2O$: | 10 à 16% |
| $BaO$: | 3,0 à 5,9% |
| $Fe_2O_3$: | 2,0 à 4,0% |
| $F$: | 0 à 0,4% |
| $TiO_2$: | 0 à 3% |
| $ZrO_2$: | 0 à 3% |
| $ZnO$: | 0 à 2% |
| avec $TiO_2+ZrO_2+ZnO$: | 0 à 4% |

la somme des constituants sus-mentionnés représentant au moins 98% en poids du verre.

Un verre préféré, pour l'ensemble de ses propriétés, est un verre ayant la composition suivante:

| | |
|---|---|
| $SiO_2$: | 70,1 à 73% |
| $Al_2O_3$: | 4,1 à 6% |
| $Li_2O$: | 2,1 à 3% |
| $Na_2O$: | 11 à 15% |
| $BaO$: | 3 à 5% |
| $Fe_2O_3$: | 2 à 4% |
| $F$: | 0,1 à 0,2% |
| $TiO_2$: | 0 à 2% |
| $ZrO_2$: | 0 à 2% |
| $ZnO$: | 0 à 2% |
| avec $TiO_2+ZrO_2+ZnO$: | 0 à 4% |

la somme des constituants sus-mentionnés représentant au moins 98% du verre.

Les verres de l'invention se préparent de façon classique par fusion d'une charge de matières premières appropriées apportant les constituants sus-mentionnés de la composition du verre. On peut, par exemple, fondre la charge à 1420°C, puis procéder à un affinage à 1470°C. Le verre peut être facilement ètiré en un tube par des procédés classiques sans risques de dévitrification, sa viscosité à la température de liquidus étant supérieure à 30 000 poises (3000 Pa.s).

Comme indiqué ci-dessus, la silice doit constituer 67 à 73% du verre. Au dessus de 73%, la viscosité du verre devient trop forte et des problèmes de dévitrification apparaissent. Au-dessous de 67% les propriétés du verre deviennent moins bonnes. L'alumine doit constituer 3,5 à 6% du verre. Au-dessous de 3,5% le verre présente une résistance à la corrosion médiocre et au-dessus de 6% le verre devient trop visqueux. L'oxyde de lithium influe sur le coefficient de dilatation thermique du verre et doit être compris entre 1 et 3%. L'oxyde de sodium doit être compris entre 10 et 16% pour obtenir un compromis acceptable entre les propriétés de dilatation thermique du verre et de volatilisation à la température de scellement. L'oxyde de baryum doit être maintenu entre 3,0 et 5,9% sous peine de faire sortir le coefficient de dilatation thermique de la gamme indiquée. Le fluor sert à obtenir des propriétés de viscosité satisfaisantes mais doit être maintenu au-dessous de 0,4% sous peine d'augmenter le taux de volatilisation. La plus grande partie de l'oxyde de fer doit être présente sous forme ferreuse ($Fe^{2+}$) pour conférer des propriétés d'absorption des rayons infrarouges au verre, mais est mentionné sous forme de $Fe_2O_3$ pour des raisons de commodité. Les constituants optionnels $TiO_2$, $ZrO_2$ et $ZnO$ ne sont pas indispensables mais leur présence peut être tolerée dans les proportions indiquées. L'addition de $TiO_2$ et $ZrO_2$ peut être avantageuse pour améliorer la résistance chemique du verre et pour ajuster finement la dilatation thermique et la viscosité du verre. La présence de $K_2O$, trop volatil, doit être exclue, de même que celle de $B_2O_3$, ce dernier n'étant pas favorable à la réduction du taux de volatilisation.

Le verre de l'invention est soudable aux alliages, tels que celui vendu sous la marque déposée "Niron 52" (un alliage nickel-fer), utilisés couramment dans la fabrication des lames des interrupteurs Reed.

Outre la fabrication d'interrupteurs Reed, le verre de l'invention est susceptible d'être utile comme enveloppe de dispositifs électroniques divers.

Comme matières premières, on peut utiliser, comme cela est bien connu dans la technique verrière, les oxydes euxmêmes ou des matières se décomposant en ces oxydes à la température de fusion utilisée, comme des carbonates. L'oxyde de fer provient avantageusement d'oxalate ferreux de manière à obtenir un rapport

$$\frac{Fe^{2+}}{Fe^{3+}}$$

le plus élevé possible. Le fluor peut être apporté par un fluorure ou un flourosilicate.

Dans le tableau ci-après, on donne, à titre d'exemples, quelques compositions de verres entrant dans le cadre de l'invention ainsi que le coefficient de dilatation thermique moyen de ces verres dans la plage de 20 à 300°C, la température de scellement des ces verres prise comme étant la température à laquelle la viscosité du verre est égale à $10^4$ poises ($10^3$ Pa.s), la température de ramollissement de ces verres prise comme étant la température à laquelle la viscosité du verre est égale à $10^{7,6}$ poises ($10^{6,6}$ Pa.s) et le taux de volatilisation de ces verres, exprimé en ppm (parties par million), à la température de scellement. A titre de comparaison, on a indiqué également la composition et les propriétés du verre Corning Code 9365.

La méthode de mesure du taux de volatilisation était la suivante: des plasquettes d'une surface de 5 $cm^2$ de verre poli de faible épaisseur (0,5 mm) sont placées sur une plaquette en platine chauffée par effet Joule. Le tout est placé dans une enceinte où l'on fait un vide donné. Au-dessus du verre, on place une coupelle en platine recouvrant au maximum la plaquette; la distance plaquette-coupelle est de 7 cm environ. Le verre est rapidement porté à une température correspondant à une viscosité de 6300 poises (630 Pa.s); il est maintenu à cette température durant 2 minutes.

La matière volatilisée est condensée sur la coupelle et dosée. Le nettoyage préalable des plaquettes est très important et doit être fait très correctement; les plus grandes précautions sont à prendre pour manipuler les coupelles pour éviter toute pollution.

Comme on le voit, les verres de l'invention présentent un taux de volatilisation notablement inférieur à celui du verre connu de comparaison et auront donc beaucoup moins tendance à encrasser l'appareillage de scellement par infrarouges. Egalement, les verres de l'invention peuvent être scellés à une température plus basse que le verre de comparaison. L'énergie à apporter pour réaliser la soudure est donc plus réduite, ce qui permet soit d'augmenter les cadences de fabrication, soit de réduire la puissance admise sur les lampes infrarouges. Une telle réduction de puissance a un effet bénéfique sur la durée de vie des lampes.

| Verre n° | 1 | 2 | 3 | 4 | 5 | 6 | 7 | 8 | 9 | 10 | Code 9365 |
|---|---|---|---|---|---|---|---|---|---|---|---|
| $SiO_2$ | 71,82 | 71,52 | 71,02 | 71,52 | 71,52 | 71,52 | 71,02 | 71,02 | 71,02 | 71,02 | 70,38 |
| $Al_2O_3$ | 3,94 | 3,95 | 4,45 | 3,95 | 3,95 | 3,95 | 4,45 | 4,45 | 4,45 | 4,45 | 2,90 |
| F | 0,14 | 0,14 | 0,14 | 0,14 | 0,14 | 0,14 | 0,14 | 0,14 | 0,14 | 0,14 | 0,64 |
| $Li_2O$ | 1,67 | 2,91 | 2,41 | 1,91 | 1,91 | 1,91 | 2,41 | 2,41 | 2,41 | 2,41 | 0,68 |
| $Na_2O$ | 13,48 | 12,51 | 13,01 | 13,51 | 13,51 | 13,51 | 13,01 | 13,01 | 13,01 | 13,01 | 8,55 |
| BaO | 5,47 | 5,5 | 5,5 | 3,5 | 3,5 | 3,5 | 4,5 | 4,5 | 4,5 | 3,8 | 7,75 |
| $Fe_2O_3$ | 3,47 | 3,47 | 3,47 | 3,47 | 3,47 | 3,47 | 3,47 | 3,47 | 3,47 | 3,47 | 2,90 |
| $K_2O$ | — | — | — | — | — | — | — | — | — | — | 6,20 |
| $Ti_2O$ | — | — | — | 2,00 | — | — | 1,00 | — | — | 1,00 | — |
| ZnO | — | — | — | — | 2,00 | — | — | 1,00 | — | — | — |
| $ZrO_2$ | — | — | — | — | — | 2,00 | — | — | 1,00 | 0,70 | — |
| $\alpha_{20}^{300}(10^{-7}/°C)$ | 90,6 | 90,5 | 89,4 | 88,2 | 88,5 | 87,3 | 88,2 | 88,0 | 90,5 | 91,1 | 90,5 |
| Température à $10^4$ poises ($10^3$ Pa.s) | 968 | 960 | 962 | 959 | 976 | 996 | 966 | 972 | 985 | 974 | 1000 |
| Température à $10^{7.6}$ poises ($10^{6.6}$ Pa.s) | 632 | 618 | 625 | 636 | 630 | 645 | 628 | 625 | 634 | 631 | 643 |
| Volatilisation (ppm) | 91 | 115 | 151 | 110 | 151 | 105 | 90 | 92 | 100 | 95 | 320 |

## Revendications

1. Verre de scellement présentant un coefficient d'absorption des rayons infra-rouges d'au moins 98% (dans la gamme de 0,7 à 4 microns), un coefficient de dilatation thermique moyen entre 20 et 300°C compris entre 88 et $92,5 \times 10^{-7}/°C$ et une faible volatilisation à la température de scellement, caractérisé en ce qu'il a la composition suivante, en % en poids:

| | |
|---|---|
| $SiO_2$: | 67 à 73% |
| $Al_2O_3$: | 3,5 à 6,0% |
| $Li_2O$: | 1,0 à 3,0% |
| $Na_2O$: | 10 à 16% |
| BaO: | 3,0 à 5,9% |
| $Fe_2O_3$: | 2,0 à 4,0% |
| F: | 0 à 0,4% |
| $TiO_2$: | 0 à 3% |
| $ZrO_2$: | 0 à 3% |
| ZnO: | 0 à 2% |
| avec $TiO_2+ZrO_2+ZnO$: | 0 à 4%, |

la somme des constituants sus-mentionnés représentant au moins 98% en poids du verre.

2. Verre selon la revendication 1, caractérisé en ce qu'il a la composition suivante, en % en poids:

| | |
|---|---|
| $SiO_2$: | 70,1 à 73% |
| $Al_2O_3$: | 4,1 à 6% |
| $Li_2O$: | 2,1 à 3% |
| $Na_2O$: | 11 à 15% |
| BaO: | 3 à 5% |
| $Fe_2O_3$: | 2 à 4% |
| F: | 0,1 à 0,2% |
| $TiO_2$: | 0 à 2% |
| $ZrO_2$: | 0 à 2% |
| ZnO: | 0 à 2% |
| avec $TiO_2+ZrO_2+ZnO$: | 0 à 4%, |

la somme des constituants sus-mentionnés représentant au moins 98% du verre.

## Patentansprüche

1. Einschmelzglas mit einem Absorptionskoeffizienten für infrarote Strahlungen von wenigstens 98% (im Bereich von 0,7—4 $\mu$m), einem Wärmeausdehnungskoeffizienten zwischen 20 und einschließlich 300°C zwischen 88 und $92,5 \times 10^{-7}/°C$ und einer geringfügigen Verdampfung bei der Gießtemperatur, gekennzeichnet durch folgende Zusammensetzung in Gewichtsprozenten:

| | |
|---|---|
| $SiO_2$: | 67—73 |
| $Al_2O_3$: | 3,5—6 |
| $Li_2O$: | 1,0—3 |
| $Na_2O$: | 10—16 |
| BaO: | 3—5,9 |
| $Fe_2O_3$: | 2—4 |
| F: | 0—0,4 |
| $TiO_2$: | 0—3 |
| $ZrO_2$: | 0—3 |
| ZnO: | 0—2 |
| mit $TiO_2+ZrO_2+ZnO$: | 0—4, |

wobei die Summe der zuvor erwähnten Bestandteile wenigstens 98 Gew.% des Glases ausmachen.

2. Glas nach Anspruch 1, dadurch gekennzeichnet, daß es folgende Zusammensetzung in Gewichtsprozenten aufweist:

| | |
|---|---|
| $SiO_2$: | 70,1—73 |
| $Al_2O_3$: | 4,1—6 |
| $Li_2O$: | 2,1—3 |
| $Na_2O$: | 11—15 |
| BaO: | 3—5 |
| $Fe_2O_3$: | 2—4 |
| F: | 0,1—0,2 |
| $TiO_2$: | 0—2 |
| $ZrO_2$: | 0—2 |
| ZnO: | 0—2 |
| mit $TiO_2+ZrO_2+ZnO$: | 0—4, |

wobei die Summe der zuvor erwähnten Bestandteile wenigstens 98% des Glases ausmachen.

## Claims

1. Sealing glass having an absorption coefficient for infra-red rays of at least 98% (in the range of 0.7 to 4 $\mu$m), an average coefficient of thermal expansion in the 20—300°C range comprised between 88 and 92.5×10$^{-7}$/°C and a low volatilization at the sealing temperature, characterized by having the following composition, in % by weight:

| | |
|---|---|
| SiO$_2$: | 67 to 73% |
| Al$_2$O$_3$: | 3.5 to 6.0% |
| Li$_2$O: | 1.0 to 3.0% |
| Na$_2$O: | 10 to 16% |
| BaO: | 3.0 to 5.9% |
| Fe$_2$O$_3$: | 2.0 to 4.0% |
| F: | 0 to 0.4% |
| TiO$_2$: | 0 to 3% |
| ZrO$_2$: | 0 to 3% |
| ZnO: | 0 to 2% |
| with TiO$_2$+ZrO$_2$+ZnO: | 0 to 4%, |

the sum of the above-mentioned constituents being at least 98% by weight of the glass.

2. Glass according to claim 1, characterized by having the following composition, in % by weight:

| | |
|---|---|
| SiO$_2$: | 70.1 to 73% |
| Al$_2$O$_3$: | 4.1 to 6% |
| Li$_2$O: | 2.1 to 3% |
| Na$_2$O: | 11 to 15% |
| BaO: | 3 to 5% |
| Fe$_2$O$_3$: | 2 to 4% |
| F: | 0.1 to 0.2% |
| TiO$_2$: | 0 to 2% |
| ZrO$_2$: | 0 to 2% |
| ZnO: | 0 to 2% |
| with TiO$_2$+ZrO$_2$+ZnO: | 0 to 4%, |

the sum of the above-mentioned constituents being at least 98% by weight of the glass.